# EUROPÄISCHE PATENTANMELDUNG

(11) **EP 3 461 469 A1**
(43) Veröffentlichungstag der Anmeldung: **03.04.2019**
(21) Anmeldenummer: 17194377.2
(22) Anmeldetag: 02.10.2017
(51) Int. Cl.: A61J 1/10

(54) **PRIMÄRPACKMITTEL**

(71) Anmelder: Weibel CDS AG, 9104 Waldstatt (CH)
(72) Erfinder: Wyler, Samuel, 9030 Abtwil (CH); Weibel, Ludwig Daniel, 9104 Waldstatt (CH)
(74) Vertreter: Hepp Wenger Ryffel AG

(57) **Zusammenfassung**

Ein Primärpackmittel (1) für eine Flüssigkeit umfasst einen insbesondere zumindest teilweise kollabierbaren Behälter (2) und ein Anschlusselement (3) zum Anschliessen des Primärpackmittels (1) an eine Entnahmevorrichtung. Das Anschlusselement (3) weist zumindest einen Anschlusskanal (4) auf, der mit einem Innenraum (5) des Behälters (2) in Fluidkommunikation steht. Der Behälter (2) besteht zumindest teilweise aus einer Folie (6), die aus einer ersten Schicht aufgebaut ist, welche bei bestimmungsgemässem Gebrauch des Primärpackmittels (1) direkt mit der Flüssigkeit in Kontakt kommt. Sowohl die erste Schicht (7) als auch das Anschlusselement (3) bestehen aus einem Kunststoffmaterial enthaltend ein Cycloolefin-Polymer.

## Beschreibung

Die vorliegende Erfindung betrifft ein Primärpackmittel für eine Flüssigkeit gemäss dem Oberbegriff von Anspruch 1.

Primärpackmittel sind Verpackungsmittel, wie Phiolen, Ampullen, Karpulen, Flaschen, Gläser oder Dosen, die in direktem Kontakt mit Lebensmitteln oder Arzneimittel kommen. Solche Packmittel können aus verschiedenen Materialien gefertigt sein, beispielsweise aus Kunststoffmaterialien, Metallen, Gläsern oder Keramiken. Umverpackungen, die nicht in direktem Kontakt zu den Lebens- oder Arzneimitteln stehen, werden Sekundärpackmittel genannt und zählen demnach nicht zu den Primärpackmitteln.

Gerade an Primärpackmittel im Pharmabereich sind erhöhte Anforderungen gestellt. So müssen diese es ermöglichen, ein Pharmazeutikum über einen längeren Zeitraum aufzubewahren, ohne dass dieses aus dem Packmittel austritt. Gleichzeitig muss der darin enthaltene Wirkstoff vor äusseren Einflüssen wie Sauerstoff, Feuchtigkeit oder UV-Strahlung geschützt werden. Nicht zuletzt darf es durch das Primärpackmittel nicht zu einer Verunreinigung des Präparates kommen, beispielsweise durch Eintrag von Additiven aus Kunststoffmaterialien. Gerade bei flüssigen Pharmazeutika zur parenteralen Anwendung sind die diesbezüglichen Anforderungen besonders hoch.

In diesem Zusammenhang offenbart die US 5,364,384 ein Primärpackmittel für eine Flüssigkeit umfassend einen kollabierbaren Behälter und ein Anschlusselement zum Anschliessen des Primärpackmittels an eine Entnahmevorrichtung. Derartige Behälter haben viele Vorteile gegenüber anderen Flüssigkeitsbehältnissen. So zeichnen sie sich durch eine hohe Robustheit, ein geringes Gewicht und einen kleinen Platzbedarf aus. Diese Behälter sind oft aus Polyvinylchlorid oder Ethylenvinylacetat-Copolymer hergestellt. Sie werden üblicherweise aus zwei Folienteilen gebildet, die an ihren vier Seiten zusammengeschweisst sind. Zwischen den Folien ist an einer Seite ein Anschlusselement eingeschweisst, welches über einen Anschlusskanal ein Entnehmen von Flüssigkeit aus dem Behälter ermöglicht.

Derartige Primärpackmittel haben sich für eine Reihe von pharmazeutischen Anwendungen, insbesondere für Injektions- oder Infusionslösungen durchgesetzt. In diesem Zusammenhang besteht allerdings das Problem, dass die üblicherweise verwendeten Materialien nach wie vor eine vergleichsweise hohe Durchlässigkeit für Wasserdampf haben. Darüber hinaus können aus den besagten Kunststoffen leicht Additive austreten und pharmazeutische Zusammensetzungen verunreinigen. Daher ist die maximale Aufbewahrungsdauer in solchen Primärpackmitteln vergleichsweise beschränkt. Darüber hinaus stellt auch die geringe mechanische Festigkeit, insbesondere die Reissfestigkeit, von bekannten Packmitteln regelmässig ein Problem dar.

Es ist daher die Aufgabe der vorliegenden Erfindung, die obengenannten Nachteile im Stand der Technik zu überwinden. Insbesondere ist es eine Aufgabe der vorliegenden Erfindung, ein vielfältig anwendbares Primärpackmittel der oben genannten Art zu schaffen, in dem Pharmazeutika über einen längeren Zeitraum aufbewahrt werden können, ohne dass es zu einer Veränderung des Präparates kommt. Das Primärpackmittel soll darüber hinaus auf konventionelle Weise herstellbar und sterilisierbar sein sowie eine hohe mechanische Festigkeit zeigen. Darüber hinaus soll das Packmittel sämtlichen regulatorischen Anforderungen genügen.

Diese Aufgaben werden durch ein Primärpackmittel gelöst, welches die Merkmale in Anspruch 1 aufweist. Das Primärpackmittel für eine Flüssigkeit umfasst einen insbesondere zumindest teilweise kollabierbaren Behälter und ein Anschlusselement zum Anschliessen des Primärpackmittels an eine Entnahmevorrichtung. Das Anschlusselement weist zumindest einen Anschlusskanal auf, der mit einem Innenraum des Behälters in Fluidkommunikation steht. Der Behälter besteht zumindest teilweise aus einer Folie, die aus einer ersten Schicht aufgebaut ist, welche bei bestimmungsgemässem Gebrauch des Primärpackmittels direkt mit der Flüssigkeit in Kontakt kommt. Sowohl die erste Schicht als auch das Anschlusselement bestehen aus einem Kunststoffmaterial enthaltend ein Cycloolefin-Polymer.

Bei Cycloolefin-Polymeren handelt es sich um eine Klasse von Polymeren, die aus zumindest einem Monomer herstellbar sind, das ein zyklisches Olefin ist. Die besagte Klasse wird weiter in Cycloolefin-Homopolymere und Cycloolefin-Copolymere unterteilt. Cycloolefin-Polymere zeichnen sich durch hervorragende Barriereeigenschaften bezüglich Wasserdampf aus. Darüber hinaus lassen sie sich in einem hohen Reinheitsgrad technisch verwenden, wodurch ein minimaler Einsatz von Additiven möglich ist. Dadurch wird ein Eintrag von Fremdsubstanzen in eine in einem erfindungsgemässen Primärpackmittel enthaltenen pharmazeutischen Zusammensetzung im Wesentlichen verhindert. Cycloolefin-Polymere sind darüber hinaus frei von Halogenen und Bisphenol A. Sie weisen eine hohe mechanische Belastbarkeit und hervorragende optische Eigenschaften, insbesondere Transparenz, auf. Ferner lassen sich Cycloolefin-Polymere gut sterilisieren, sei es durch Dampfsterilisation, Gamma-Strahlung, Ethylenoxid oder UV-Strahlung.

Vorteilhaft an einem einfindungsgemässen Primärpackmittel ist insbesondere, dass bei bestimmungsgemässem Gebrauch desselben eine darin enthaltene Flüssigkeit lediglich mit Cycloolefin-Polymeren in Kontakt kommt. Dadurch kann mit einem solchen Packmittel weitaus leichter sichergestellt werden, dass alle regulatorischen Anforderungen erfüllt sind.

Der Anteil an Cycloolefin-Polymer am Kunststoffmaterial der ersten Schicht und/oder des Anschlusselementes kann wenigstens 60 Gew.-%, vorzugsweise wenigstens 80 Gew.-%, bevorzugterweise wenigstens 90 Gew.-%, betragen. Es hat sich gezeigt, dass die oben beschriebenen vorteilhaften Eigenschaften mit einem höheren Anteil an Cycloolefin-Polymer in einem höheren Ausmass erzielt werden können.

Die erste Schicht und das Anschlusselement können aus zwei unterschiedlichen Kunststoffmaterialien, jeweils enthaltend ein Cycloolefin-Polymer, bestehen. Dadurch lassen sich die spezifischen Eigenschaften der eingesetzten Kunststoffmaterialien gezielt auf die jeweiligen Teile des Primärpackmittels abstimmen. So kann für den kollabierbaren Behälter eine Cycloolefin-Polymerzusammensetzung verwendet werden, die sich besonders gut zu Folien extrudieren lässt. Für das Anschlusselement kann hingegen eine Zusammensetzung gewählt werden, welche besonders gut zur Verarbeitung mittels Spritzguss geeignet ist.

Das zumindest eine Cycloolefin-Polymer kann ausgewählt sein aus einem Cycloolefin-Homopolymer und einem Cycloolefin-Copolymer. Während Cycloolefin-Homopolymere lediglich aus Monomeren aufgebaut sind, welche zyklische Olefine sind, bestehen Cycloolefin-Copolymere einerseits aus Monomeren, welche zyklische Olefine sind, andererseits aber auch aus weiteren Monomeren, insbesondere azyklischen Olefinen. Als azyklisches olefinisches Monomer hat sich dabei insbesondere Ethen bewährt. Allerdings können auch andere Monomere, wie beispielsweise Propen zum Einsatz kommen. Cycloolefin-Copolymere bieten dabei den Vorteil, dass deren Eigenschaften durch die Monomerzusammensetzung gezielt beeinflusst werden kann. Dies ermöglicht einen weiten Spielraum, um die erwünschten Materialeigenschaften zu erzielen.

Das zumindest eine Cycloolefin-Polymer kann aus einem Monomer ausgewählt aus einer Liste bestehend aus Cyclopenten, Cyclohexen, Norbornen, Dicyclopentadien, Tetracyclodecen und Methyltetracyclodecen herstellbar sein. Dabei handelt es sich um Monomere, die besonders gut zur Herstellung von Cycloolefin-Polymeren geeignet sind.

Die erste Schicht hat üblicherweise eine Dicke von 5 µm bis 200 µm, vorzugsweise von 10 µm bis 100 µm, bevorzugterweise 20 µm bis 60 µm.

Bei einem derartigen Primärpackmittel kann die Folie aus zumindest einer weiteren zweiten Schicht aufgebaut sein. Damit kann die Folie mit weiteren technischen Eigenschaften oder Funktionen ausgestattet werden, die gegebenenfalls erforderlich sind. So kann die zumindest eine weitere Schicht aus einem Kunststoffmaterial enthaltend ein Fluoropolymer bestehen. Eine solche Folie weist neben der bereits erwähnten Barriereneigenschaft bezüglich Wasserdampf auch eine äusserst geringe Durchlässigkeit gegenüber Sauerstoff und anderen Gasen auf. Das Fluoropolymer kann dabei ausgewählt sein aus einer Liste bestehend aus Polyvinylfluorid, Polyvinylidenfluorid, Polytetrafluorethylen, Polychlotrifluorethylen, Ethylen-tetrafluorethylen und Perfluor(ethylen-propylen). Gerade diese Fluoropolymere zeigen eine besonders gute Barrierewirkung gegenüber Sauerstoff.

Die zumindest eine weitere zweite Schicht hat mit Vorteil eine Dicke von 10 µm bis 500 µm, vorzugsweise von 25 µm bis 250 µm, bevorzugter weise von 50 µm bis 150 µm.

Zwischen der ersten und der zweiten Schicht kann dabei zumindest eine Haftvermittlerschicht angeordnet sein. Diese trägt dazu bei, dass die erste und die zweite Schicht besser aneinander haften. Die Haftvermittlerschicht hat üblicherweise eine Dicke von 1 µm bis 100 µm, vorzugsweise von 5 µm bis 50 µm, bevorzugterweise von 7 µm bis 25 µm. Selbstverständlich ist der Einsatz mehrerer Haftvermittlungsschichten denkbar, welche je nach den angrenzenden Folienschichten unterschiedliche Eigenschaften haben können.

Bei einem erfindungsgemässen Primärpackmittel kann der Anschlusskanal mit einem Septum verschlossen sein. Ein solches bietet den Vorteil, dass der Inhalt des Behälters sehr leicht durch Durchstechen desselben zugänglich ist. Eine weitestgehende Keimfreiheit ist gewährleistet.

Das Septum kann einstückig mit dem Anschlusselement ausgebildet sein. Dadurch kann der Anschlusskanal auf effiziente Weise dicht verschlossen werden. Darüber hinaus muss bei der Herstellung des Primärpaktmittels kein Septum in Form eines separaten Teiles in den Anschlusskanal eingesetzt werden. Insbesondere durch Spritzguss lässt sich ein Anschlusselement mit einstückig ausgebildetem Septum auf sehr effiziente und kostengünstige Weise herstellen.

Am Septum kann zusätzlich ein Dichtungselement angeordnet sein. Dies ist insbesondere vorteilhaft, wenn das Septum nicht elastisch genug ist, um beim Durchstechen desselben mittels einer Kanüle einen fluiddichten Übergang vom Anschlusskanal zur Kanüle zu bilden.

Das Anschlusselement kann zumindest einen zusätzlichen Füllkanal aufweisen, der mit einem Innenraum des Behälters in Fluidkommunikation steht. Wenn ein solcher Füllkanal vorhanden ist, kann das Packmittel in montiertem Zustand mit einer Flüssigkeit befüllt werden. Da der Anschlusskanal hierzu nicht erforderlich ist, kann dieser bereits mit einem Septum verschlossen sein, welches hierzu nicht durchstochen werden muss. Der Füllkanal kann mit einem Stopfen verschlossen sein. Bevorzugterweise besteht auch dieser Stopfen aus einem Cycloolephyn-Polymer wie oben beschrieben.

Ein erfindungsgemässes Primärpackmittel kann ein flüssiges Pharmazeutikum oder Diagnostikum enthalten, insbesondere ausgewählt aus einer Liste bestehend aus folgenden Mitteln:
- Analgetika
- Chemotherapeutika
- Hormone
- Psychopharmaka
- Anästhetika
- Antidiabetika
- Antiallergika
- Antikoagulanzien
- Antibiotika
- Diuretika
- Vakzine
- Laxantien
- Sedativa
- Kardiaka
- Kontrastmittel.

In einer bevorzugten Ausführungsform handelt es sich beim Pharmazeutikum um einen monoklonalen Antikörper.

Weitere Vorteile und Einzelmerkmale der Erfindung ergeben sich aus der nachfolgenden Beschreibung eines Ausführungsbeispiels und aus den Zeichnungen.

Es zeigen schematisch:
- Figur 1:: Perspektivische Darstellung eines erfindungs-gemässen Primärpackmittels;
- Figur 2:: Perspektivische Schnittdarstellung des Primärpackmittels gemäss Figur 1;
- Figur 3:: Perspektivische Schnittdarstellung des Anschlusselementes des Primärpackmittels gemäss Figur 1;
- Figur 4:: Perspektivische Darstellung eines alternativen Ausführungsbeispiels eines erfindungsgemässen Primärpackmittels;
- Figur 5:: Perspektivische Schnittdarstellung des Primärpackmittels gemäss Figur 4;
- Figur 6:: Perspektivische Schnittdarstellung des Anschlusselementes des Primärpackmittels gemäss Figur 4;
- Figuren 7 und 8:: Querschnittdarstellungen von Folien erfindungsgemässer Primärpackmittel.

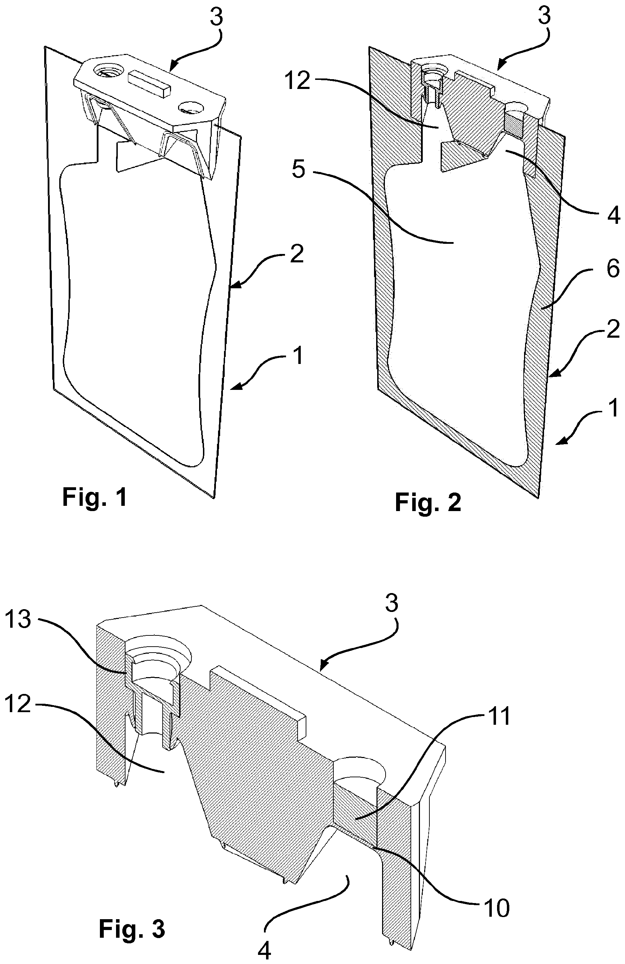

Die Figuren 1 und 2 zeigen ein erstes Ausführungsbeispiel eines erfindungsgemässen Primärpackmittels 1. Das Primärpackmittel 1 umfasst einen kollabierbaren Behälter 2, der aus zwei übereinanderliegenden und an ihren Kanten miteinander verschweissten Folien 6 gebildet ist. Aufgrund der Wahl der Schnittebene in Figur 2 ist dort nur eine der beiden Folien 6 sichtbar. An der oberen kurzen Kante der Folien 6 ist das Anschlusselement 3 zwischen den Folien 6 eingeschweisst. Dieses erlaubt es, eine Fluidkommunikation zwischen einer Entnahmevorrichtung und dem Innenraum 5 des Behälters 2 herzustellen. In Figur 3 sind nähere Einzelheiten zum Anschlusselement 3 ersichtlich. Es ist zu erkennen, dass dieses über einen Anschlusskanal 4 sowie einen Füllkanal 12 verfügt. Der Anschlusskanal 4 ist durch ein Septum 10 verschlossen, welches einstückig mit dem Anschlusselement 3 ausgebildet ist. Auf der Aussenseite des Septums ist eine Dichtung 11 angebracht, die beim Penetrieren des Septums 10 mit einer Kanüle verhindert, dass es am Übergang des Septums 10 zur Kanüle zu Undichtigkeiten kommt. Die Dichtung 11 ist dazu elastisch verformbar. Der Füllkanal 12 ist hingegen mit einem Stopfen 13 verschlossen, der im vorliegenden gezeigten Beispiel gleich wie das Anschlusselement 3 aus einem Cycloolefin-Polymer besteht.

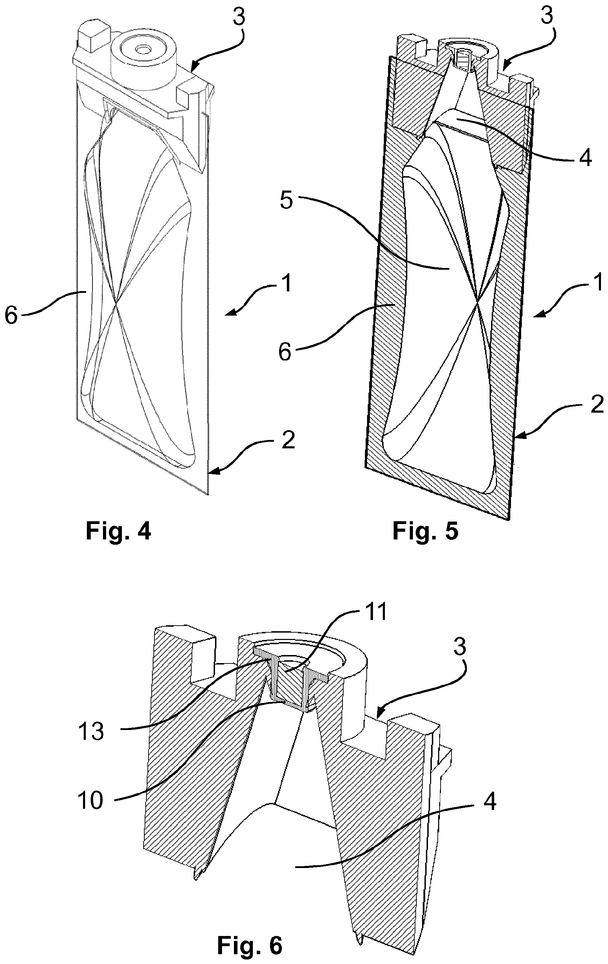

Die Figuren 4 und 5 zeigen ein alternatives Ausführungsbeispiel eines erfindungsgemässen Primärpackmittels 1. Der Behälter 2 weist hier den gleichen Folienaufbau wie einleitend beschrieben auf. Allerdings ist das Anschlusselement 3 mit einem einzigen Anschlusskanal 4 ausgestattet. Aus Figur 6 sind nähere Einzelheiten zum Anschlusselement 3 ersichtlich. Es ist zu erkennen, dass der Anschlusskanal 4 mit einem Stopfen 13 verschlossen ist. Mit dem Stopfen 13 ist einstückig ein Septum 10 ausgebildet, das zum Herstellen einer Fluidverbindung zwischen dem Innenraum 5 des Behälters 2 und einer Entnahmevorrichtung von einer Kanüle durchstochen werden kann. Auf der Aussenseite des Septums 10 ist wiederum eine Dichtung 11 angeordnet.

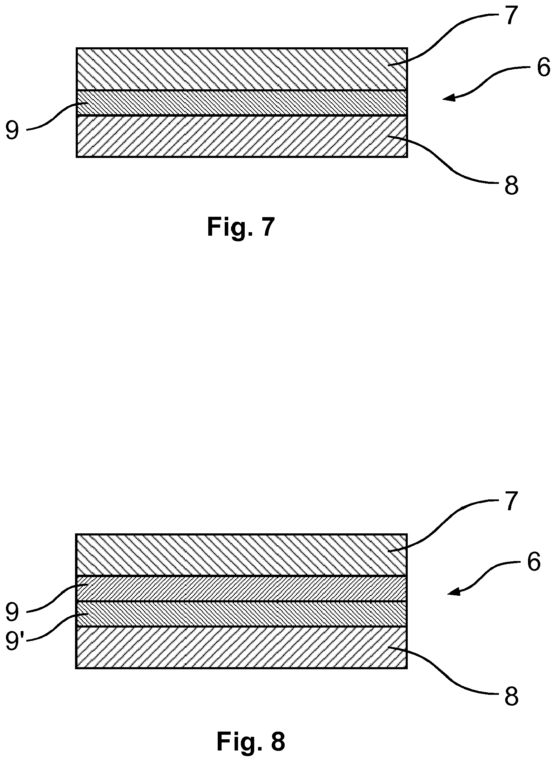

Die Figuren 7 und 8 zeigen zwei mögliche Varianten für einen Schichtaufbau der Folie 6 eines erfindungsgemässen Primärpackmittels 1. Bei der ersten Schicht 7 handelt es sich um ein Cycloolefin-Polymer. Darüber hinaus ist eine zweite Schicht 8 vorhanden, bei der es sich um ein Polychlotrifluorenthylen (PCTFE) handelt. In der Variante gemäss Figur 7 ist zwischen der ersten Schicht 7 und der zweiten Schicht 8 eine einzelne Haftvermittlungsschicht 9 angebracht. Beim Beispiel gemäss Figur 8 sind zwischen der ersten Schicht 7 und der zweiten Schicht 8 zwei Haftvermittlungsschichten 9, 9' angebracht. Die erste Haftvermittlungsschicht 9 ist dabei derart ausgewählt, dass sie eine gute Verbindung mit der ersten Schicht 7 und der zweiten Haftvermittlerschicht 9' eingeht. Die zweite Haftvermittlerschicht 9' ist derart ausgewählt, dass sie eine gute Verbindung mit der zweiten Schicht 8 und der ersten Haftvermittlerschicht 9 eingeht. Die zweite Schicht aus PCTFE erfüllt im vorliegenden Beispiel die Funktion, eine Barriereschicht für Sauerstoff und andere Gase bereitzustellen.

## Patentansprüche

1. Primärpackmittel (1) für eine Flüssigkeit umfassend einen insbesondere zumindest teilweise kollabierbaren Behälter (2) und ein Anschlusselement (3) zum Anschliessen des Primärpackmittels (1) an eine Entnahmevorrichtung, wobei das Anschlusselement (3) zumindest einen Anschlusskanal (4) aufweist, der mit einem Innenraum (5) des Behälters (2) in Fluidkommunikation steht, wobei der Behälter (2) zumindest teilweise aus einer Folie (6) besteht, die aus einer ersten Schicht (7) aufgebaut ist, welche bei bestimmungsgemässem Gebrauch des Primärpackmittels (1) direkt mit der Flüssigkeit in Kontakt kommt, **dadurch gekennzeichnet, dass** sowohl die erste Schicht (7) als auch das Anschlusselement (3) aus einem Kunststoffmaterial enthaltend ein Cycloolefin-Polymer bestehen.

2. Primärpackmittel (1) nach Anspruch 1, wobei der Anteil an Cycloolefin-Polymer am Kunststoffmaterial der ersten Schicht (7) und/oder des Anschlusselementes (3) wenigstens 60 Gew.-%, vorzugsweise wenigstens 80 Gew.-%, bevorzugterweise wenigstens 90 Gew.-%, beträgt.

3. Primärpackmittel (1) nach einem der Ansprüche 1 oder 2, wobei die erste Schicht (7) und das Anschlusselement (3) aus zwei unterschiedlichen Kunststoffmaterialien, jeweils enthaltend ein Cycloolefin-Polymer, bestehen.

4. Primärpackmittel (1) nach einem der Ansprüche 1 bis 3, wobei das zumindest eine Cycloolefin-Polymer ausgewählt ist aus einem Cycloolefin-Homopolymer und einem Cycloolefin-Copolymer.

5. Primärpackmittel (1) nach einem der Ansprüche 1 bis 4, wobei das zumindest eine Cycloolefin-Polymer aus einem Monomer ausgewählt aus einer Liste bestehend aus Cyclopenten, Cyclohexen, Norbornen, Dicyclopentadien, Tetracyclododecen und Methyltetracyclododecen herstellbar ist.

6. Primärpackmittel (1) nach einem der Ansprüche 1 bis 5, wobei die Folie (6)aus zumindest einer weiteren zweiten Schicht (8) aufgebaut ist.

7. Primärpackmittel (1) nach Anspruch 6, wobei die zumindest eine weitere zweite Schicht (8) aus einem Kunststoffmaterial enthaltend ein Fluorpolymer besteht.

8. Primärpackmittel (1) nach Anspruch 7, wobei das Fluorpolymer ausgewählt ist aus einer Liste bestehend aus Polyvinylfluorid, Polyvinylidenfluorid, Polytetrafluorethylen, Polychlortrifluorethylen, Ethylen-Tetrafluorethylen und Perfluor(ethylen-propylen).

9. Primärpackmittel (1) nach einem der Ansprüche 6 bis 8, wobei zwischen der ersten (7) und der zweiten (8) Schicht zumindest eine Haftvermittlerschicht (9, 9') angeordnet ist.

10. Primärpackmittel (1) nach einem der Ansprüche 1 bis 9, wobei der Anschlusskanal mit einem Septum (10) verschlossen ist.

11. Primärpackmittel (1) nach Anspruch 10, wobei das Septum (10) einstückig mit dem Anschlusselement (3) ausgebildet ist.

12. Primärpackmittel (1) nach einem der Ansprüche 10 oder 11, wobei am Septum (10) zusätzlich ein Dichtungselement (11) angeordnet ist.

13. Primärpackmittel (1) nach einem der Ansprüche 1 bis 12, wobei das Anschlusselement (3) zumindest einen zusätzlichen Füllkanal (12) aufweist, der mit einem Innenraum (5) des Behälters (2) in Fluidkommunikation steht.

14. Primärpackmittel (1) nach Anspruch 13, wobei der Füllkanal (12) mit einem Stopfen (13) verschlossen ist.

15. Primärpackmittel (1) nach einem der Ansprüche 1 bis 14, enthaltend ein flüssiges Pharmazeutikum oder Diagnostikum, insbesondere ausgewählt aus einer Liste bestehend aus einem Analgetikum, einem Chemotherapeutikum und einem Hormon.
